# EUROPEAN PATENT APPLICATION

(11) **EP 2 530 969 A1**
(43) Date of publication of application: **05.12.2012**
(21) Application number: 12003865.8
(22) Date of filing: 16.05.2012
(51) Int. Cl.: H04W 28/20, H04W 36/18, H04W 36/24, H04W 36/30, H04L 12/24

(54) **Dynamic wireless channel selection and protocol control for streaming media**

(30) Priority: 31.05.2011 US 201161491838 P; 31.08.2011 US 201113223250
(71) Applicant: Broadcom Corporation, Irvine, CA 92617 (US)
(72) Inventor: Agarwal, Peyush, 95035 Milpitas CA (US); Rajakarunanayake, Yasantha, 94582 San Ramon (CA); Hammerschmidt, Joachim S., 94041 Mountain View (CA)
(74) Representative: Jehle, Volker Armin

(57) **Abstract**

Dynamic wireless channel selection and protocol control for streaming video utilizing transmission delay/packet loss information and channel utilization statistics. A transmission delay and packet loss monitor generates transmission delay information during the transmission of a video stream to remote wireless device(s) over a first wireless channel by timestamping and monitoring video packet(s) and associated transmission acknowledgement(s). The transmission delay information is compared to a predetermined threshold (e.g., a maximum tolerated delay threshold and/or total packet loss threshold) and, if the threshold is exceeded, a second wireless channel is selected for continued transmission of the video stream. In one mode, channel utilization statistics are likewise examined prior to a channel relocation event. Selection of the second wireless channel may be accomplished through a random or semi-random channel selection process, or through active scanning to collect clear channel assessment statistics for candidate channels. In another mode, at least one transmission protocol parameter is altered in response to a violation of one or more of the predetermined thresholds.

## Description

### CROSS REFERENCE TO RELATED PATENTS/PATENT APPLICATIONS

### Provisional priority claim

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Patent Application Serial No. 61/491,838, entitled "Media communications and signaling within wireless communication systems," (Attorney Docket No. BP22744), filed 05-31-2011, pending.

### Incorporation by Reference

The following standards/draft standards are hereby incorporated herein by reference in their entirety and are made part of the present U.S. Utility Patent Application for all purposes:
1. "WD3: Working Draft 3 of High-Efficiency Video Coding, Joint Collaborative Team on Video Coding (JCT-VC)," of ITU-T SG16 WP3 and ISO/IEC JTC1/SC29/WG11, Thomas Wiegand, et al., 5th Meeting: Geneva, CH, 16-23 March, 2011, Document: JCTVC-E603, 215 pages.
2. International Telecommunication Union, ITU-T, TELECOMMUNICATION STANDARDIZATION SECTOR OF ITU, H.264 (03/2010), SERIES H: AUDIOVISUAL AND MULTIMEDIA SYSTEMS, Infrastructure of audiovisual services - Coding of moving video, Advanced video coding for generic audiovisual services, Recommendation ITU-T H.264, also alternatively referred to as International Telecomm ISO/IEC 14496-10 - MPEG-4 Part 10, AVC (Advanced Video Coding), H.264/MPEG-4 Part 10 or AVC (Advanced Video Coding), ITU H.264/MPEG4-AVC, or equivalent.

### Incorporation by Reference

The following IEEE standards/draft IEEE standards are hereby incorporated herein by reference in their entirety and are made part of the present U.S. Utility Patent Application for all purposes:
1. IEEE Std 802.11™ - 2007, "IEEE Standard for Information technology-Telecommunications and information exchange between systems-Local and metropolitan area networks-Specific requirements; Part 11: Wireless LAN Medium Access Control (MAC) and Physical Layer (PHY) Specifications," IEEE Computer Society, IEEE Std 802.11™-2007, (Revision of IEEE Std 802.11-1999), 1233 pages.
2. IEEE Std 802.11n™ - 2009, "IEEE Standard for Information technology-Telecommunications and information exchange between systems-Local and metropolitan area networks-Specific requirements; Part 11: Wireless LAN Medium Access Control (MAC) and Physical Layer (PHY) Specifications; Amendment 5: Enhancements for Higher Throughput," IEEE Computer Society, IEEE Std 802.11 n™-2009, (Amendment to IEEE Std 802.11™ - 2007 as amended by IEEE Std 802.11 kTM - 2008, IEEE Std 802.11r™ - 2008, IEEE Std 802.11y™ - 2008, and IEEE Std 802.11r™ - 2009), 536 pages.
3. IEEE P802.11ac™/D1.1, August 2011, "Draft STANDARD for Information Technology - Telecommunications and information exchange between systems - Local and metropolitan area networks - Specific requirements, Part 11: Wireless LAN Medium Access Control (MAC) and Physical Layer (PHY) specifications, Amendment 5: Enhancements for Very High Throughput for Operation in Bands below 6 GHz," Prepared by the 802.11 Working Group of the 802 Committee, 297 total pages (pp. i-xxiii, 1-274).

### BACKGROUND OF THE INVENTION

### TECHNICAL FIELD OF THE INVENTION

The invention relates generally to wireless communication systems and the transmission of video data; and, more particularly, it relates to adaptive wireless channel selection and/or protocol parameter selection based on various combinations of transmission delay, packet loss and channel utilization statistics.

### DESCRIPTION OF RELATED ART

Many approaches for improving video error robustness/concealment have been proposed, and these approaches can generally be divided into two groups. The first group is related to network layer solutions that attempt to recover the error/packet loss at packet layer, by providing an error free A/V stream to the video decoder. Such solutions usually require redundant codes and retransmissions. The second group is related to video layer solutions, especially post-processing, that will accept a corrupted video stream and try to mitigate gaps and mismatches in the decoded video frames.

As may be understood, both of these groups (network layer solutions and video layer solutions) have their strengths and weaknesses. In particular, a heavily protected network layer might be very robust and resilient to errors, but usually this is accompanied by a reduction in the constant throughput of the channel and/or an increase in the effective latency of the channel. For the video layer, one of the primary considerations is the overall user experience (e.g., the perceptual experience of a user). Video should appear smooth and natural, even under variable network conditions. Under variable channel conditions, providing an acceptable user experience can be particularly challenging for real-time (or near real-time) video streams, as both packet loss and channel delay can have deleterious effects on perceived video quality (e.g., blocking or blurring effects, video freezing or jerkiness, and audio/video synchronization issues).

More particularly, during real-time video encoding and transmission, a packet transmission incremental delay greater than a frame interval might have the same effect as a dropped or lost packet. The video decoder typically needs to decode and present each video frame within a relatively short time period. Consequently, if a packet is delayed too much over the network it might be impossible to complete frame decoding in time for display. If a delayed or dropped frame is also a reference frame for other frames, decoding errors for multiple frames may occur. Particularly in the context of wireless communications under noisy conditions, the present art does not provide an adequate means by which communication of media related content may be effectuated in a robust, reliable, and perceptually acceptable manner.

### BRIEF SUMMARY OF THE INVENTION

According to an aspect, a method is provided for use in a wireless access device during the transmission, over a first wireless channel, of a video stream, the method comprising:
monitoring a transmit queue of the wireless access device to generate transmission delay information for packets of the video stream transmitted over the first wireless channel;
comparing the transmission delay information to a predetermined threshold(s); and
triggering selection of a second wireless channel for further transmission of the video stream if the transmission delay information exceeds the predetermined threshold(s).

Advantageously, the step of monitoring a transmit queue comprises:
marking a video packet(s) with an indication of the time the respective video packet(s) is submitted for transmission by the wireless access device;
receiving at least one of associated transmission acknowledgment and packet expiration information for the video packet(s);
calculating transmission delays for the video packet(s) by comparing the indication of the time the respective video packet(s) is submitted for transmission with the associated transmission acknowledgment information and/or packet expiration information; and
generating transmission delay information based on the calculated transmission delays.

Advantageously, the method further comprises:
generating a completion timestamp relating to the transmission acknowledgment and/or packet expiration information, and wherein the step of calculating transmission delays for the video packets comprises comparing the indication of the time a video packet is submitted for transmission with the timestamp.

Advantageously, the step of selecting a second wireless channel occurs on a periodic basis, and wherein the threshold(s) value(s) are established such that transmission delay information in excess of the threshold(s) value(s) is indicative of potential difficulties in transmission of the video stream.

Advantageously, the predetermined threshold(s) is at least one of a maximum tolerated delay threshold and a total packet loss threshold.

Advantageously, the threshold(s) value(s) are adjustable in response to at least one of PHY characteristics, transmission protocol parameters, communication protocol parameters, and channel and reception characteristics relating to the wireless channel.

Advantageously, the method further comprises:
analyzing the first wireless channel to generate channel utilization statistics; and
comparing the channel utilization statistics to a second predetermined threshold(s), wherein the step of triggering selection of a second wireless channel is further dependent on a determination that the channel utilization statistics exceed the second predetermined threshold(s).

Advantageously, the channel utilization statistics indicate channel utilization by at least one of transmissions from other devices and other energies in the first wireless channel.

Advantageously, the channel utilization statistics comprise counter values indicating the duration of detected transmissions from other devices sharing the first wireless channel.

Advantageously, the method further comprises:
identifying a second wireless channel;
transmitting a channel switch announcement, the announcement including an identification of the second channel;
receiving an acknowledgment of the channel switch announcement; and
continuing transmission of the video stream utilizing the second wireless channel.

Advantageously, resuming transmission of the video stream comprises directing the first transmitted frame of the video stream to be an intra-coded frame.

Advantageously, the wireless access device operable with a plurality of supported wireless channels, wherein identifying a second wireless channel comprises:
selecting a random wireless channel from the group of supported wireless channels;
monitoring the random wireless channel to generate associated channel utilization statistics; and
comparing the associated channel utilization statistics to a predetermined threshold(s), and wherein transmission of the video stream is continued on the random wireless channel if the associated utilization statics are below the predetermined threshold(s).

Advantageously, the wireless access device operable with a plurality of supported wireless channels, wherein identifying a second wireless channel comprises:
scanning individual channels of the plurality of supported wireless channels to collect clear channel assessment statistics for the individual channels; and
comparatively analyzing the clear channel assessment statistics to select a second wireless channel from the plurality of supported wireless channels.

According to an aspect, a method is provided for use in a wireless access device during the transmission, over a first wireless channel, of a video stream, the method comprising:
monitoring a transmit queue of the wireless access device to generate transmission delay information for packets of the video stream transmitted over the first wireless channel;
comparing the transmission delay information to a predetermined threshold(s);
triggering selection of a second wireless channel for further transmission of the video stream if the transmission delay information exceeds the predetermined threshold(s); and
altering at least one protocol parameter of the second wireless channel.

Advantageously, the at least one protocol parameter comprising at least two of slot assignment parameters, transmit power allocation parameters, beam forming parameters, MIMO parameters, channel coding/block coding parameters, frequency band assignment parameters, packet length parameters, data rate parameters, forward error correction parameters, error detection parameters, contention period parameters, and back-off parameters.

According to an aspect, an apparatus comprises:
a network interface for supporting transmission of a packetized video stream over a wireless channel of a plurality of supported wireless channels, the network interface comprising a transmit queue; and
a channel selection module operable to dynamically control selection of the wireless channel by:
   monitoring the transmit queue of the network interface to generate transmission delay information for packets of the video stream transmitted over a first wireless channel;
   comparing the transmission delay information to a predetermined threshold(s); and
   triggering selection of a second wireless channel for further transmission of the video stream if the transmission delay information exceeds the predetermined threshold(s).

Advantageously, wherein monitoring the transmit queue comprises:
marking a video packet(s) with an indication of the time the respective video packet(s) is submitted for transmission by the network interface;
receiving at least one of associated transmission acknowledgment and packet expiration information for the video packet(s);
calculating transmission delays for the video packet(s) by comparing the indication of the time the respective video packet(s) is submitted for transmission with the associated transmission acknowledgment information and/or packet expiration information; and
generating transmission delay information based on the calculated transmission delays.

Advantageously, the channel selection module further operable to dynamically control selection of the wireless channel by:
analyzing the first wireless channel to generate channel utilization statistics; and
comparing the channel utilization statistics to a second predetermined threshold(s), wherein triggering selection of a second wireless channel is further dependent on a determination that the channel utilization statistics exceed the second predetermined threshold(s).

Advantageously, the channel utilization statistics indicate channel utilization by transmissions from other devices and other energies in the first wireless channel.

Advantageously, the channel selection module further operable by:
identifying a second wireless channel;
transmitting a channel switch announcement, the announcement including an identification of the second channel;
receiving an acknowledgment of the channel switch announcement; and
continuing transmission of the video stream utilizing the second wireless channel.

### BRIEF DESCRIPTION OF THE SEVERAL VIEWS OF THE DRAWINGS

**FIG. 1** is a block diagram representation of a video network 100 in accordance with an embodiment of the present invention.
**FIG. 2** is a functional block diagram illustrating encoding and adaptive communication of a video stream by a wireless access device in accordance with an embodiment of the present invention.
**FIG. 3** is a functional block diagram illustrating dynamic channel and/or protocol selection in accordance with an embodiment of the present invention.
**FIG. 4** is a flow diagram illustrating a method for adaptive wireless channel and/or protocol parameter selection, based on transmission delay and channel utilization information, in accordance with an embodiment of the present invention.
**FIGS. 5** and **6** are flow diagrams illustrating dynamic channel switching in accordance with an embodiment of the present invention.
**FIG. 7** is a flow diagram illustrating a method for dynamic wireless channel switching in accordance with an embodiment of the present invention.
**FIG. 8** is a flow diagram illustrating a method for dynamic wireless channel selection in accordance with an embodiment of the present invention.
**FIG. 9** is a flow diagram illustrating an alternate method for dynamic wireless channel selection in accordance with an embodiment of the present invention.
**FIG. 10** is a flow diagram illustrating a method for calculating packet transmission delay information in accordance with an embodiment of the present invention.
**FIG. 11** is a flow diagram illustrating operations for altering transmission parameters of a wireless channel according to one or more embodiments of the present invention.

### DETAILED DESCRIPTION OF THE INVENTION

A novel approach is presented herein for optimizing video transmission over a packet-based, lossy communication medium/channel in order to improve the end user experience. The novel approach is related to the use of transmission delay/packet loss information and channel utilization statistics to adaptively regulate wireless channel and/or transmission protocol selection so that improved error concealment, error resilience and bandwidth usage is achievable during, for example, transmission of a media/video stream having a relatively constant bit rate.

Although packet-based networks can provide high throughput, there is often no guarantee of low transmission delays, constant throughput and a low level of net data losses under "noisy" channel conditions. Channel conditions can be influenced by a variety of factors, including signal strength, pattern noise (e.g., microwave bursts), interference from other carriers, and network congestion on specific nodes. Transient impulse noise can also have a short term detrimental effect on the available bandwidth of a wireless channel.

The present invention is generally applicable to video streams encoded in accordance with various video compression standards, protocols, and/or recommended practices (e.g., MPEG-4 Part 2, H.264 (AVC), WMV, AVS, RealVideo and Quicktime, among others). While the novel approach presented herein oftentimes employs wireless packet-based transmissions in exemplary embodiments (e.g., IP/udp), the various aspects and principles, and their equivalents, can also be extended generally to any network transmission (regardless of the particular type of communication medium being employed such as wired, wireless, optical, etc.) over a communication channel that is lossy or variable.

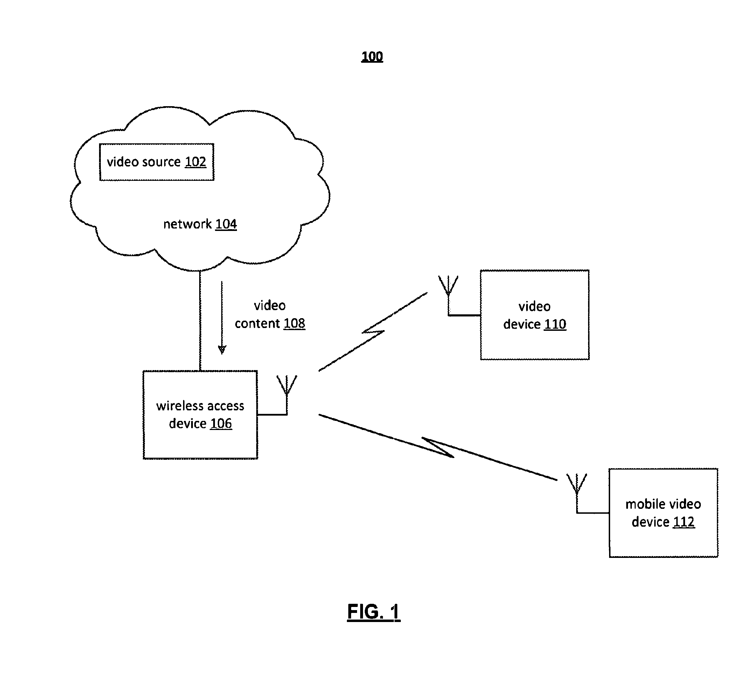

Referring more specifically to the figures, **FIG. 1** is a block diagram representation of a video network 100 in accordance with an embodiment of the present invention. The network 104 distributes information such as video content 108 from a video source 102 to a wireless access device 106 for wireless transmission to wireless video devices, such as video device 110 and mobile video device 112, over one or more wireless channels. The video content 108 can include movies, television shows, commercials or other advertisements, educational content, video gaming content, infomercials, or other program content and optionally additional data associated with such program content including but limited to digital rights management data, control data, programming information, additional graphics data and other data that can be transferred in association with program content. Video content 108 can include video with or without associated audio content. The video content 108 can be sent as broadcast video, streaming video, video on demand and near video on demand programming and/or other formats.

The network 104 can be a dedicated video distribution network such as a direct broadcast satellite network or cable television network that distributes video content 108 from a plurality of video sources, including video source 102, to a plurality of wireless access devices and, optionally, wired devices over a wide geographic area. Alternatively, network 104 can be a heterogeneous network that includes one or more segments of a general purpose network such as the Internet, a metropolitan area network, wide area network, local area network or other network and optionally other networks such as an Internet protocol (IP) television network. Over various portions of a given network, the video content 108 can be carried as analog and/or digital signals according to various recognized protocols.

Wireless access device 106 may comprise a base station or access point that provides video content 108 to one or a plurality of video subscribers over a wireless local area network (WLAN) such as an 802.11a, .11b, .11g, .11n, .11ac, etc., Bluetooth, WIMAX or other WLAN network, or a cellular network such as a UMTS, EDGE, 3G, 4G or other cellular data network. In addition, the wireless access device 106 can comprise a home gateway, video distribution point in a dedicated video distribution network or other wireless gateway for wirelessly transmitting video content 108, either alone or in association with other data, signals or services, to video device 110 and/or mobile video device 112.

Mobile video device 112 may comprise a video enabled wireless smartphone or other handheld communication device that is capable of displaying video content. Video device 110 may comprise other video display devices that may or may not be mobile including a television coupled to a wireless receiver, a computer with wireless connectivity via a wireless data card, wireless tuner, wireless speakers (e.g., surround sound speakers for receiving high quality audio that may have strict latency requirements), WLAN modem or other wireless link or device that alone or in combination with other devices is capable of receiving video content 108 from wireless access device 106 and displaying and/or storing the video content 108 for a user.

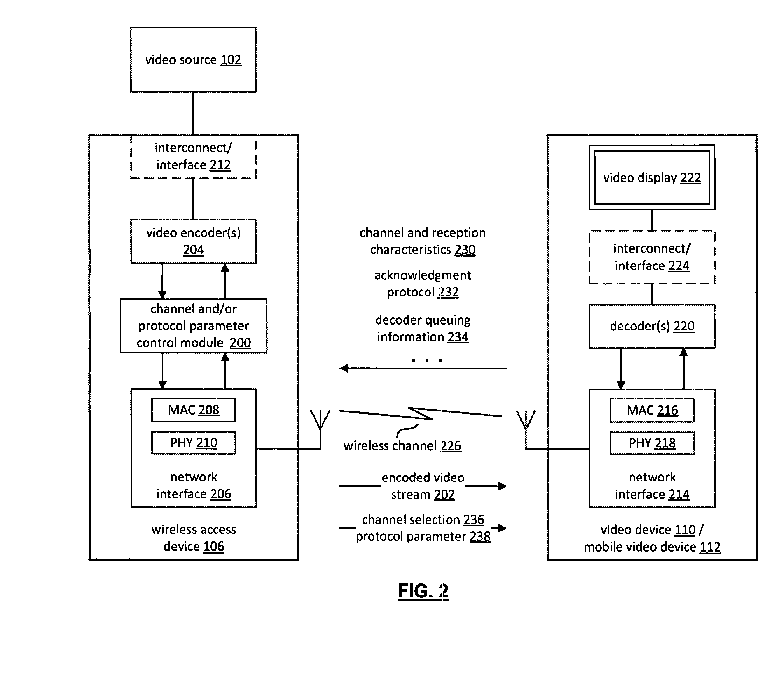

The network 104, wireless access device 106, video device 110 and/or mobile video device 112 include one or more features of the present invention that are described in greater detail in conjunction with **FIGS. 2-11** that follow.

FIG. 2 is a functional block diagram illustrating encoding and adaptive communication of a video stream by a wireless access device in accordance with an embodiment of the present invention. A channel and/or protocol parameter control module 200 is shown that can be used as part of wireless access device 106 to provide an encoded video stream 202 to a video device 110/mobile video device 112 over a wireless channel 226. Generally speaking, when considering a communication system in which video data is communicated wirelessly from one location, or subsystem, to another, video data encoding may generally be viewed as being performed at a transmitting side of the wireless channel 226, and video data decoding may generally be viewed as being performed at a receiving side of the wireless channel 226.

In the illustrated embodiment, video content is provided by a video source 102 to the wireless access device 106 for encoding (or further encoding or transcoding) and transmission. The video content 102 may be communicated to the wireless access device 106 by various means such as those described above. In one embodiment, the video source 102 comprises a gaming console or multi-function console, cable or satellite set top box, media server or the like that is coupled to the wireless access device 106 by a standardized interconnect/interface 212. The standardized interconnect/interface 212 may comprise, for example, an interface for an audio/video cable such as an HDMI cable (in which case the wireless access device 106 may take the form of a wireless dongle), an Ethernet cable, a high bandwidth wireless link (e.g., a WiGig or WirelessHD compliant link) capable of transmitting uncompressed, standard or high definition video content, or various combinations of such technologies.

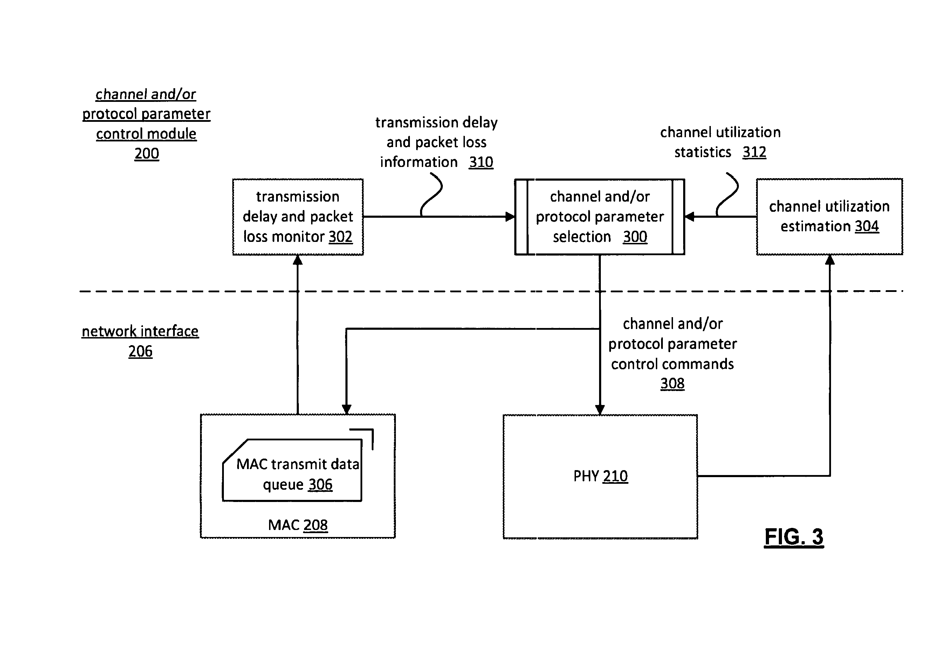

Wireless access device 106 includes a video encoder(s) 204 that receives and encodes video content for transmission (in the form of encoded video stream 202) by network interface 206 over wireless channel 226. As described more fully below with reference to **FIG. 3****,** a channel and/or protocol parameter control module 200 communicates with the network interface 206, including signals for adaptively controlling the selection of a particular wireless channel 226 and/or transmission protocol parameters. The channel and/or protocol parameter control module 200 is also capable of receiving information from the network interface 206. Such information can be used by the channel and/or protocol parameter control module 200 to monitor transmit queue depth/latency under varying conditions in accordance with the present invention.

Encoded video content from the encoder 204 is provided to network interface 206 for transmission to video device 110/mobile video device 112 (hereinafter referred to collectively or in the alternative as video device 110). In the disclosed embodiment, the network interface 206 includes medium access control (MAC) 208 and physical layer (PHY) 210 circuitry. A main purpose of the MAC 208 is to allocate the bandwidth of the wireless channel 226 and coordinate access when multiple video devices 110/112 are sharing the channel. Among other functions, the PHY 210 establishes and terminates connections to the wireless channel 226. In the disclosed embodiment, PHY 210 generates and transmits modulated RF signals containing the encoded video stream 202 over the wireless channel 226. As noted, the MAC 208 and PHY 210 may operate in accordance with a wide variety of packet based communication protocols, such as an IEEE 802.11 compliant network.

In the illustrated video device 110, a network interface 214 receives RF signals (over the wireless channel 202) containing the encoded video stream 202. The PHY 218, in cooperation with the MAC 216, then demodulates and down converts these RF signals to extract the encoded video stream 202. In turn, the decoder 220 operates on video data from the extracted video stream 202 to generate a decoded video stream for display on a video display 222.

An optional interconnect/interface 224 (including, for example, the various embodiments disclosed above in conjunction with interconnect/interface 212) may be utilized to provide decoded video content to, for example, a high definition television or projection system. In such embodiments, as well as other embodiments, the video display 222 may be part of or a separate component from the video device 110. Further, the video device 110 may function as relay to other (mobile) video devices.

The network interface 214 of the disclosed embodiment also provides various transmissions to the wireless access device 106 including, for example, information regarding channel and reception characteristics 230, signaling in accordance with an acknowledgement (ACK/NACK) protocol 232, status information relating to the operation of the PHY 218 (for example, bit error rate before error correction), and decoder queuing information 234. Such transmissions may be utilized in accordance with the present invention to determine transmission delay values and wireless channel conditions under a variety of operating conditions and channel selection options. Channel selection 236 and protocol parameter 238 control signals may be provided from the wireless access device 106 to the video device 110 for purposes of notifying the video device 110 of new or pending channel selections and/or protocol parameter selections and to synchronize further wireless communications.

Hereinafter, the terms "ACK", "acknowledgement", and "BA" are all meant to be inclusive of either ACK or BA (block acknowledgement) and equivalents. For example, even if only one of ACK or BA is specifically referenced, such embodiments may be equally adapted to any of ACK or BA and equivalents. One of the benefits of video stream transmission in accordance with the present invention may be a significant reduction in number of NACKs received by the wireless access device 106. It is noted, however, that ACKs may not provide an immediate indication of channel conditions when, for example, an ACK is the result of successful error correction on the receiving side of the wireless channel 226.

Channel and/or protocol parameter control module 200 (as well as other functions, such as video encoder 204) can be implemented in hardware, software or firmware. In particular embodiments, the video encoder 204 and channel and/or protocol parameter control module 200 can be implemented using one or more microprocessors, microcomputers, central processing units, field programmable logic devices, state machines, logic circuits, analog circuits, digital circuits, and/or any devices that manipulate signals (analog and/or digital) based on operational instructions that are stored in a memory module. The function, steps and processes performed by channel and/or protocol parameter control module 200 can be split between different devices to provide greater computational speed and/or efficiency. The associated memory module may be a single memory device or a plurality of memory devices. Such a memory device may be a read-only memory, random access memory, volatile memory, non-volatile memory, static random access memory (SRAM), dynamic random access memory (DRAM), flash memory, cache memory, and/or any device that stores digital information. Note that when the channel and/or protocol parameter control module 200 implements one or more of its functions via a state machine, analog circuitry, digital circuitry, and/or logic circuitry, the memory module storing the corresponding operational instructions may be embedded within, or external to, the circuitry comprising the state machine, analog circuitry, digital circuitry, and/or logic circuitry.

Further, within each of the wireless access device 106 and video device 110/mobile video device 112, any desired integration or combination may be implemented for the various components, blocks, functional blocks, circuitries, etc. therein, and other boundaries and groupings may alternatively be performed without departing from the scope and spirit of the invention. For example, all components within the network interface 206 may be included within a first processing module or integrated circuit, and all components within the network interface 214 may be included within a second processing module or integrated circuit. Likewise, while shown as separate from video source 102, video encoder(s) 204 and channel and/or protocol parameter control module 200 could be incorporated into video source 102 or other network element of network 100, and various functionality of the channel and/or protocol parameter control module 200 may be implemented within a video encoder 204.

**FIG. 3** is a functional block diagram illustrating dynamic channel and/or protocol selection in accordance with an embodiment of the present invention. In the disclosed embodiment, the channel and/or protocol parameter control module 200 operates to adaptively select wireless channels and/or protocol parameters based, at least in part, on transmission delay/packet loss information and channel utilization statistics. Operation of the invention under variable channel conditions results in improved bandwidth utilization during, for example, transmission of a media and video stream(s) having a relatively constant bit rate.

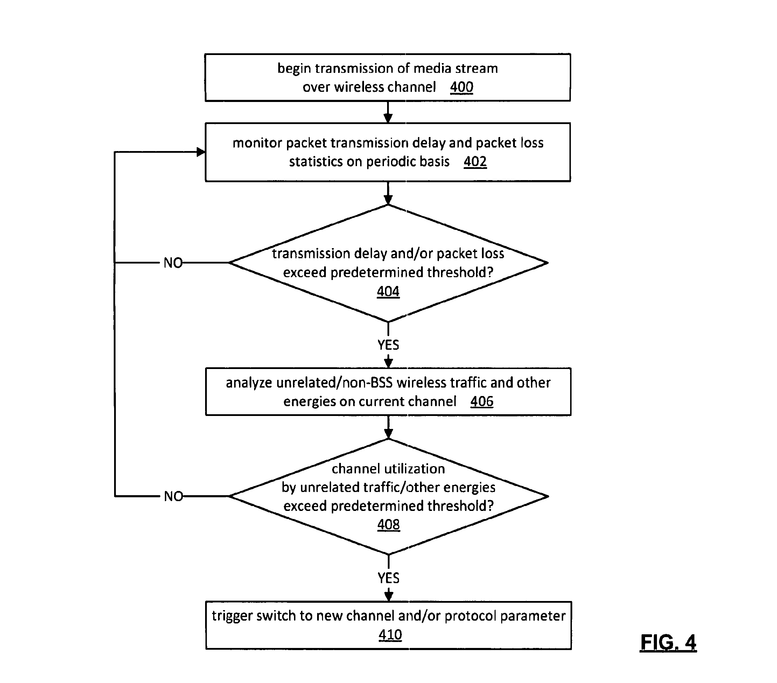

In the illustrated embodiment, channel and/or protocol parameter selection 300 (shown as a function within the channel and/or protocol parameter control module 200) utilizes transmission delay and packet loss information 310 and channel utilization statistics 312 to generate channel and/or protocol parameter control commands 308 for provision to PHY 210 and MAC 208 of the network interface 206. Transmission delay and packet loss information 310 is generated by transmission delay and packet loss monitor 302, and is based at least in part on data from a MAC transmit data queue 306 (or the like) associated with MAC 208. Channel utilization statistics 312 are generated by channel utilization estimation 304 based at least in part on information from PHY 210. Exemplary operation of the transmission delay and packet loss monitor 302 and channel estimation 304 is detailed more fully below in conjunction with **FIGS. 4****,** **7** and **10****.**

In operation, the channel and/or protocol parameter selection 300 can trigger selection of a new wireless channel under certain transmission and existing channel conditions. For example, transmission of a video stream over a deteriorating or noisy channel may be relocated to a new channel offering improved bandwidth and reception characteristics.

In another exemplary mode of operation, channel and/or protocol parameter selection 300 can selectively trigger adjustments to one or more protocol parameters, such as the packet length, data rate, forward error correction, error detection, coding scheme, modulation spectral densities, contention period, and back-off parameters used in communication between devices, based on unfavorable transmission delay/packet loss information and channel utilization (including noise and interference). In this fashion, the protocol parameters can be adapted based on the conditions or estimated conditions of the network, including not only the adoption characteristics of a particular device, but the reception characteristics of a plurality of devices, including how well each device receives transmissions from other devices.

Under challenging channel conditions and reduced throughput, for example, the channel and/or protocol parameter selection 300 may instruct the PHY 210 to utilize a lower data rate and greater forward error correction coding to protect certain video data. In a further example wherein the network interface 206 includes a multi-input multi-output (MIMO) transceiver, and the wireless channel 226 comprises a plurality of MIMO channels, the PHY 210 can be directed to adjust transmission parameters including adjusting a selected subset of the plurality of MIMO channels used to transmit the encoded video stream 202. In this fashion, the PHY 210 can assign additional transceiver channels to increase the probability that the encoded video stream 202 will be correctly received for decoding.

As used herein, the term "channel" generally refers to a wireless communication channel of fixed or configurable bandwidth within a (typically) fixed frequency band that may be licensed or unlicensed. Typical wireless communication protocols and standards provide for several contiguous wireless communication channels within one or more fixed frequency bands. Channel switching as described herein may include, but is not limited to, wireless communications according to communication protocols and standards such as those described above and the like. By way of example, dynamic channel switching in an 802.11 -compliant network in accordance with the present invention may utilize channelization in 2.4GHz and/or 5GHz frequency bands (with channel bandwidths of 20MHz, 22MHz, 40MHz, etc.). Various other channels such as those having 80MHz, 120MHz, and/or 160MHz of bandwidth may alternatively be employed, as in accordance with IEEE Task Group ac (TGac VHTL6). It is noted that other types of channels, having different bandwidths, may be employed in other embodiments without departing from the scope and spirit of the invention. In certain embodiments, channel switching may thus comprise switching the radio carrier frequency from one frequency-defined channel to another (e.g., moving a 20MHz channel centered around 5240MHz to the 20MHz centered around 5260MHz).

The term channel throughput is used generally herein to refer to an average useful bit rate (including link layer protocol overhead) over the wireless channel 226. For real time streams such as video, relevant throughput values may be subject to latency constraints (effectively isochronous throughput) and have typical values that are less than total throughput. Although throughput is typically measured in bits per second (bps) or megabits per second (Mbps), data packets per second or data packets per time interval may also be used. Many factors may impact channel throughput and/or be utilized by channel utilization estimation 304 to generate channel utilization statistics 312. Such factors include PHY characteristics and protocol parameters such as operational frequency/band, the selected modulation and coding scheme (MCS), the size of the MAC protocol data units (MPDUs) and the use of packet aggregation, supported PHY rates of the transmission protocol, channel bandwidth (e.g., 20/40MHz), guard intervals (GIs), the relevant transmission acknowledgment policy (e.g., Normal ACK/NACK, B-ACK (Block Acknowledgment) or aggregated acknowledgment, No-ACK), average size of the data (e.g., MPDUs) in an encoded stream, channel load, the number of transmit streams, etc. Such factors could be utilized, for example, to adaptively alter the thresholds employed to trigger a channel relocation.

Channel and reception characteristics may also be utilized in the selection function of block 300, including, for example, a raw bit error rate, packet error rate, power mode information, signal to noise and interference ratio, packet retransmission rate, gain estimates from, for example, a multi-variable common filter, and various reception parameters or other metrics that describe the ability of the RF channel to effectively support transmission of the encoded video stream 202 to the video device 110. Channel and/or protocol parameter selection 300 in accordance with various embodiments of the present invention may utilize one or more indicia of the above channel characteristics during a channel relocation process.

**FIG. 4** is a flow diagram illustrating a method for adaptive wireless channel and/or protocol parameter selection, based on transmission delay and channel utilization information in accordance with an embodiment of the present invention. The disclosed method may be utilized during the transmission of a video stream (step 400) having a relatively constant encoded bit rate. For example, the video stream may be generated by streaming media applications such as IPTV, home gaming environments (including rendered video), etc., and may be communicated in accordance with various protocols such as the Real-time Transport Protocol (RTP)/Real Time Streaming Protocol (RTSP) and similar open or proprietary transport and control protocols. During transmission of such video streams, the MAC transmit queue depth and latency values for packets of the stream often increase in response to deteriorating channel capacity, and generally lag and are out of phase with channel capacity. Although the illustrated method operates on a single video stream, the method is similarly applicable to the transmission of multiple video streams to one or more receiving devices. In such embodiments, transmission delay and channel utilization information may be tracked on a per stream basis and/or per device basis.

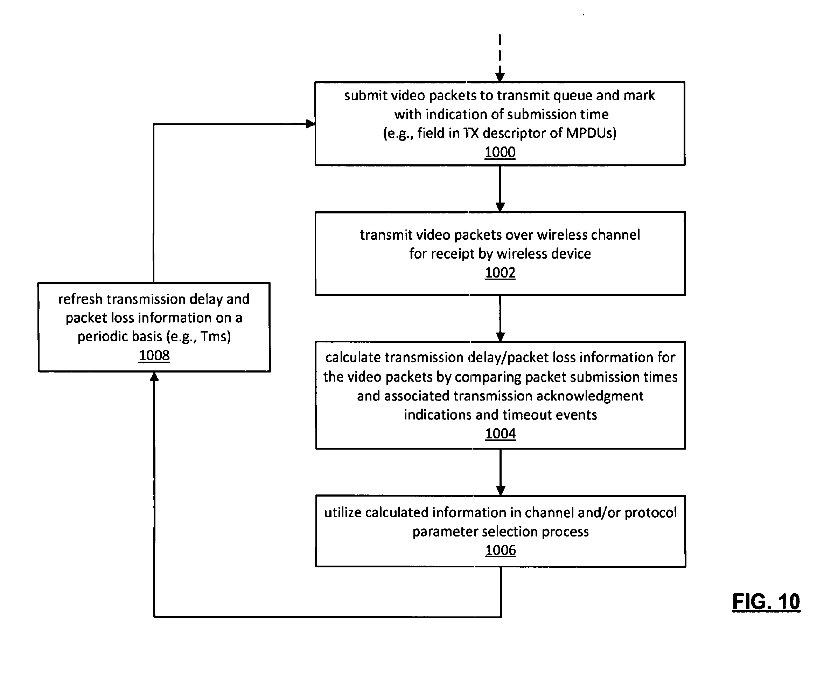

Referring next to step 402, the MAC transmit data queue is monitored for purposes of generating packet transmission delay and packet loss information for a portion of the video stream. In this embodiment, such information may be determined on a periodic basis of fixed or variable duration or on a rolling basis (e.g., within the last Tms). An exemplary embodiment of step 402 is illustrated in **FIG. 10****.** Next, in step 404, the transmission delay and/or packet loss information is compared to a predetermined threshold(s). The predetermined threshold(s) may reflect, for example, a maximum instantaneous latency value beyond which the video data stream has been or is likely to be unacceptably compromised under current channel conditions. Similarly, the predetermined threshold(s) value may include sufficient margin such that violation of the threshold does not necessarily reflect a compromised data stream, but rather indicates that a channel relocation may be prudent in order to reduce the likelihood of future data transmission impairments.

If transmission delay and/or packet loss information exceeds the predetermined threshold(s) as determined in step 404, the method continues in step 406 and additional characterization of the current channel is performed by analyzing compiled data regarding unrelated/non-BSS (Basic Service Set) traffic as distinguished from desired transmissions. Desired transmissions include those of the wireless access device 106 as well as receptions from video device(s) 110/mobile video device(s) 112. Characterization of the current channel may be generated by channel utilization estimation 304 or like functionality (using, by way of example only, the Clear Channel Assessment function within a collision avoidance/carrier sensing mechanism of an 802.11 -compliant network).

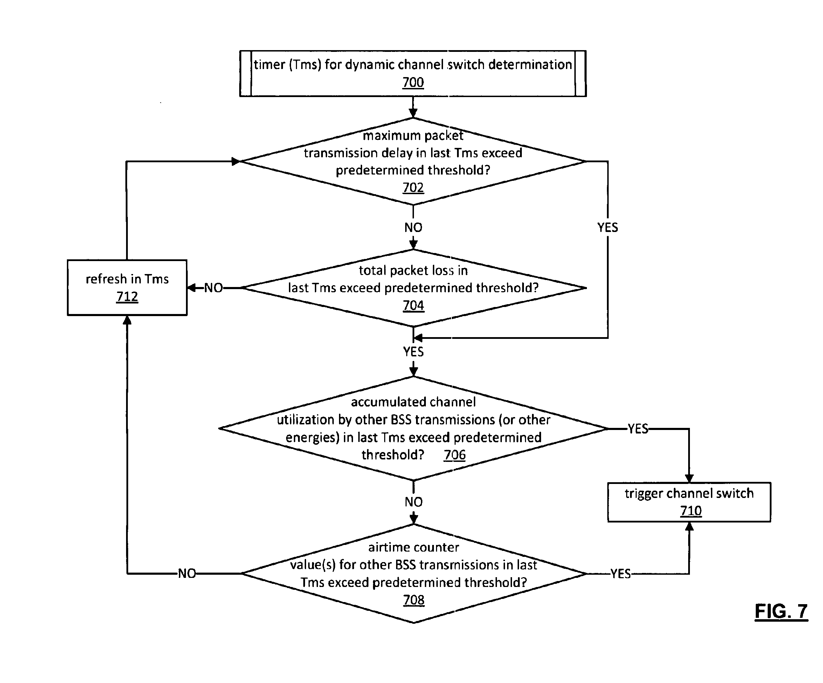

In addition to unrelated traffic on the current channel, the analysis of step 406 may further involve data relating to any other undesirable energy(ies) in the subject channel. Undesirable energies in the channel may stem from transmissions from other WLANs, non-WLAN wireless devices (such as cordless phones), and general "noise" energies, such as noise sourced by microwave ovens. In addition, local spurious signals that might exist in the host platform/casing of the wireless access device implementing dynamic channel switching may leak into the relevant wireless frequency band(s). In certain embodiments of the invention, a wireless channel(s) experiencing relatively high levels of such energies (and possibly adjacent channels) may be selectively disqualified from the selection process, either prior to a relocation or following an attempt to relocate to such channel(s). Further details of an exemplary embodiment of the analysis of step 406, involving the use of programmable histograms/counters and accumulated channel utilization data, are provided below in conjunction with **FIG. 7****.**

If channel utilization by unrelated traffic and/or other energies exceeds one or more predetermined thresholds as determined in step 408, selection of a new wireless channel and/or protocol parameter is triggered in step 410. Selection a new channel may comprise, for example, a change in channels within a specified frequency band, use of channel bonding or a wider (e.g., 40MHz) channel, or selection of a higher or lower operational frequency band (e.g., 2.4-2.8GHz or 5-5.8GHz). If predetermined thresholds are not exceeded in either of step 404 or 408, the method returns to step 402 for continued monitoring of the current channel. Referring more particularly to step 404, if transmission delay and/or packet loss information is below the predetermined threshold(s), the current channel is presumably acceptable, and examination of the other metrics described herein may not be necessary. Alternatively, such metrics could nevertheless be analyzed to substantiate that channel throughput is sufficient.

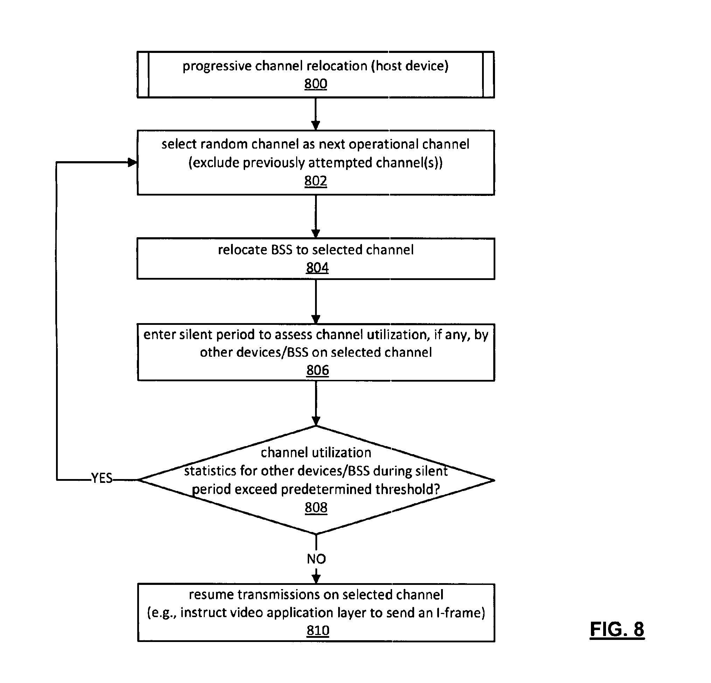

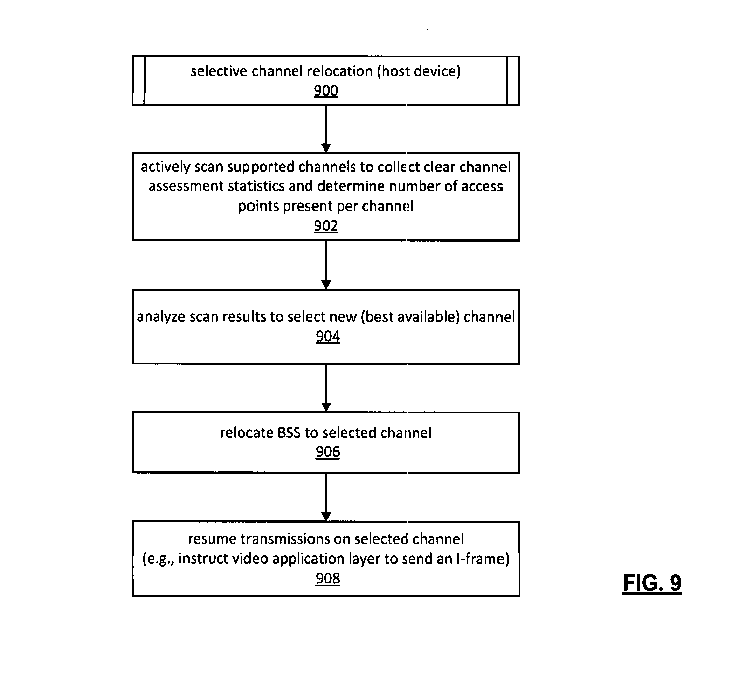

Selection of new wireless channel and/or protocol parameter values as triggered by steps 404 and 408 may be accomplished using a wide variety of approaches and algorithms without departing from scope and spirit of the present invention. The selection process may or may not be governed by information indicating that preferred channels/parameters are available. For example, a new channel or protocol parameter value may be selected based, in whole or part, on channel and reception characteristics received from network interface 214 of the video device 110 and/or channel estimation techniques. Depending on the communication standard governing the wireless channel 226, periodic measurements or interrogations/scans of channel quality may also be available for use in selecting an optimal channel when a change is indicated in accordance with the present invention (e.g., the "selective channel relocation" method of **FIG. 9****).** Alternatively, the wireless access device 106 may simply select a new channel on a random or semi-random basis (generally referred to herein as "progressive channel relocation" and including the embodiment illustrated in **Fig. 8****).**

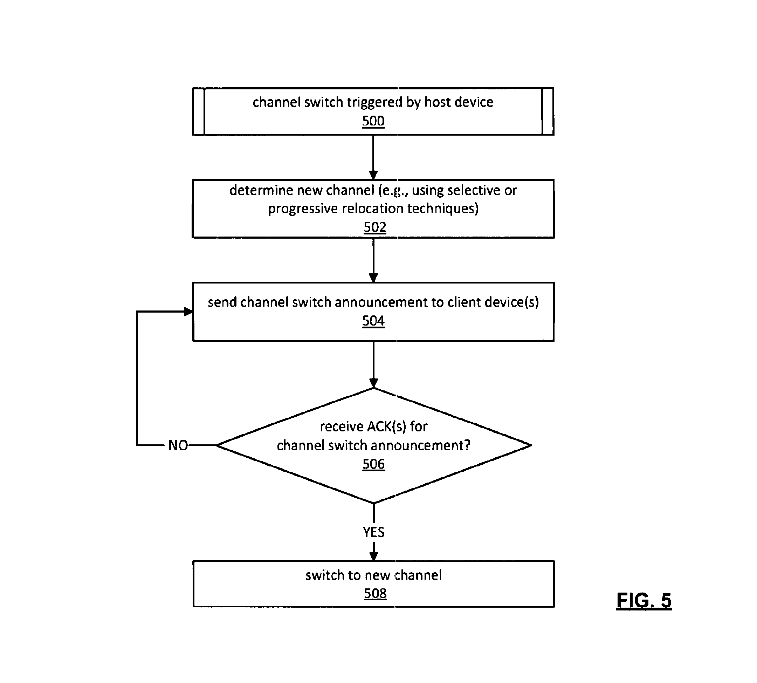

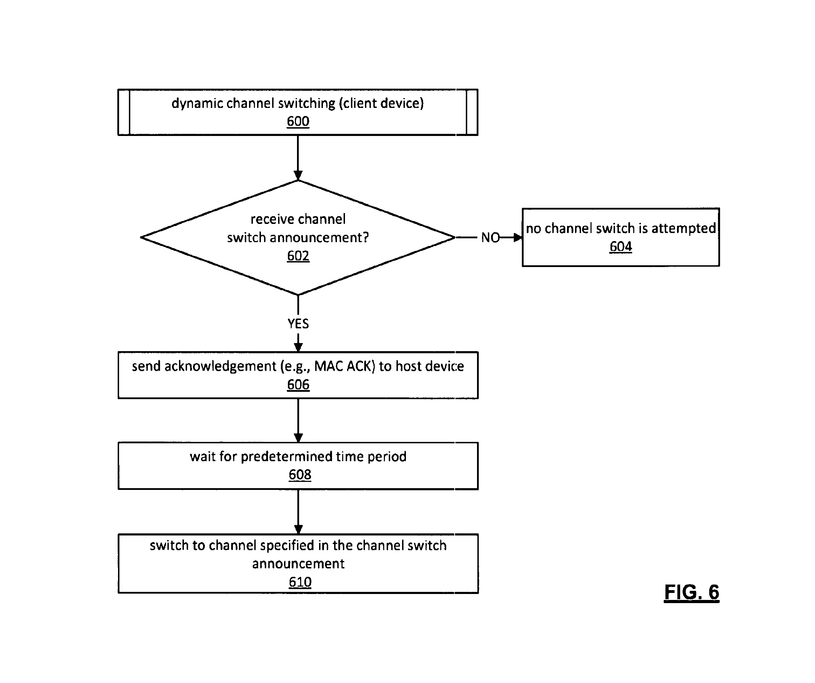

**FIGS. 5** and **6** are flow diagrams illustrating dynamic channel switching by a host device and client device, respectively, in accordance with an embodiment of the present invention. Referring to **FIG. 5****,** following initiation of a channel switch by the host device (e.g., wireless access device 106) in step 500, the method proceeds to step 502 and a new channel is chosen using either selective or progressive channel relocation.

Next, in step 504, a channel switch announcement is sent to each client device (e.g., video device 110). The channel switch announcement can take many forms, such as an action frame that includes the relevant channel switch announcement information. In an exemplary IEEE 802.11-compliant embodiment, the action frame may comprise a unicast management frame of subtype "Action". Alternatively, separate non-unicast action frames may be employed. As will be appreciated, use of 40MHz channels in this embodiment may require an additional action frame(s) specifying control channel information. Relevant channel switch announcement information might include the identity of the newly selected channel and a counter value indicating when the client device should switch to the identified channel (with a value of zero representing an immediate switch to the selected channel). The counter value may be set to a duration that permits adequate treatment of missing acknowledgements (ACKs), including NACKs, by the host device.

In step 506, the host device waits to receive an ACK for the channel switch announcement from all associated client devices. After receiving the necessary ACK(s), the host device switches to the selected channel in step 508. If one or more client devices fail to acknowledge receipt of the channel switch announcement within a given time, the host device may resend the announcement up to a specified number of attempts.

Following receipt of ACK(s) from associated client devices, wireless software/firmware implementing dynamic channel switching in accordance with one embodiment of the invention may provide various "status" codes that are utilized by the host device to minimize the likelihood and effect of interruptions to video stream delivery during the channel switch event. Such status codes may identify the current operational channel (before channel switching), the operational channel following channel switching, and/or the channel for which an unsuccessful attempt was made to relocate. The host device utilizes the status codes in various ways. For example, receipt of the current operational channel may indicate that a channel switch is required, resulting in instructions to the video application layer (or like functionality) to suspend further transmissions pending further notification.

Likewise, upon receiving the identity of operational channel following a successful relocation, the host device resumes transmission of the video stream 202. Depending on the nature of the video stream 202, the host device may resume transmission by first sending an intra-coded frame ("I-frame") or similar type of frame that requires little or no information from preceding frames in order to be successfully decoded.

If one or more client devices ultimately fail to acknowledge the channel switch announcement of step 504, or there is a failure to associate with a new channel (as may be indicated by a status code), a higher level recovery mechanism takes effect. For example, if an application layer producing the video stream 202 recognizes or is informed by the wireless access device 106 that communication is no longer reliable (e.g., following detection of a high packet loss rate), the application layer may initiate a recovery procedure wherein the wireless access device 106 is instructed to reestablish wireless communications in the manner used to initially establish the wireless connections of the network 100. This action may cause video device(s) 110 to disconnect, enter a scanning mode, and re-associate with the wireless access device 106. Alternatively, the application layer may notify the user of a video device 110 that the device should be in closer proximity to the wireless access device 106.

**FIG. 6** is a flow diagram illustrating dynamic channel switching by a client device in accordance with an embodiment of the present invention. Following initiation of the method in step 600, the client device awaits receipt of channel switch announcement in step 602. Absent such announcement, the client device does not attempt to switch channels (step 604). Following receipt and successful decoding of a channel switch announcement, the client device responds to the host device as shown in step 606 by transmitting an acknowledgment (e.g., a MAC ACK) to the host device.

Next, in step 608, the client device enters into a "silent" period for a predetermined amount of time (as specified, for example, in the channel switch announcement) before switching (step 610) to the channel specified in the channel switch announcement. As noted above, the duration of the silent period may be selected such that the host device has adequate time to address missing acknowledgements (ACKs) from the client devices receiving the video stream 202. Further, this silent period generally corresponds to and overlaps with the silent period of a host device employing a progressive channel relocation approach such as that shown in **FIG. 8** (step 806). Alternatively, the client device may be instructed to make an immediate channel switch in certain embodiments of the selective channel relocation approach of **FIG. 9****.**

After receiving a channel switch announcement, the client device may instruct its video decoder to continue displaying the last successfully received frame until the channel relocation process is complete. In addition, the channel switch announcement may be utilized to activate various error correction techniques available under the relevant compression standard or protocol.

**FIG. 7** is a flow diagram illustrating a method for dynamic wireless channel switching in accordance with an embodiment of the present invention. The illustrated embodiment provides further implementation details of the method described above in conjunction with **FIG.4****,** and utilizes a number of statistics to determine when dynamic channel switching is to be initiated.

More particularly, during a predetermined and/or programmable timer period (Tms) shown as step 700, a number of values are calculated during transmission of the video stream 202. These statistics may include: (1) maximum packet transmission delay, (2) total number of lost packets across all transmissions, (3) accumulated channel utilization (on a percentage basis) by unrelated transmissions and undesirable energies in the subject channel, and (4) airtime counter values indicating the length of various transmissions from unaffiliated or other-BSS traffic. As noted, it is not necessary for the wireless access device 106 to perform off-channel background scanning (and potentially interrupt or delay video stream delivery) in order to generate such statistics.

With respect to statistics (4), relevant values may be generated through the use of a histogram having one or more "bins" with fixed or programmable limits. Counter values in such bins can be utilized to determine the approximate length and number of "burst" transmissions from other network devices or radios sharing the channel. By way of example, a histogram having four bins may be structured as follows:

[0] Count of other-BSS traffic requiring airtime in the range of 0+ - 300us;

[1] Count of other-BSS traffic requiring airtime in the range of 300+ - 1000us;

[2] Count of other-BSS traffic requiring airtime in the range of 1000+ - 1500us;

[3] Count of other-BSS traffic requiring airtime in the range of 1500+us.

Decisions to switch channels may be made based on certain events (counts) in the histogram that indicate or imply that a channel may not be suitable for continued use. Depending on the nature of the network 100, for instance, the wireless access device 106 may only use the count in the largest bin (i.e., the bin counting events lasting more than 1.5ms, which may indicate lengthy burst transmissions from other devices/applications). In another embodiment, a channel switch could be triggered when a specified number of very long packets, in addition to a specified number of moderately long packets, are detected in the histogram. Accordingly, the histogram enables a variety of (programmable) options to make informed channel switch decisions.

In general, the predetermined thresholds of **FIG. 7** are set at values beyond which the video data stream has been or is likely to be unacceptably compromised under current channel conditions. Similarly, the predetermined threshold(s) value may include sufficient margin such that a violation of the threshold does not necessarily reflect a compromised data stream, but rather indicates that channel relocation may be prudent in order to reduce the likelihood of future data transmission difficulties, including interruptions to a video stream delivery. As discussed, PHY characteristics, protocol parameters, channel and reception characteristics, and other metrics relating to the wireless channel may also be utilized to adaptively alter the threshold values employed to trigger channel relocation.

Referring more particularly to step 702, the maximum packet transmission delay(s) (calculated, e.g., by a method such as that described in conjunction with FIG. 10) during the relevant timer period is compared to a predetermined threshold. If the threshold value is not exceeded, the method continues in step 704 and the total packet loss during the relevant timer period is compared to a predetermined threshold. If packet loss does not exceed the threshold, existing statistics are refreshed (step 712) and the method repeats at the end of the next timer period.

In the disclosed embodiment, if either of the predetermined thresholds of steps 702 and 704 is exceeded, the method continues in step 706 and the accumulated channel utilization (which may be calculated as a percentage of the available channel) by other BSS transmission and/or other energies detected in the channel during the relevant timer period is compared to a predetermined threshold. If the threshold is not exceeded, an airtime counter value(s) relating to other BSS transmissions during the relevant timer period is compared to another predetermined threshold in step 708. If either of the predetermined thresholds of steps 706 and 708 is exceeded, an attempt to switch channels (and/or alter protocol parameters) is triggered in step 710.

In order to minimize the possibility of application-rate-oscillations, the disclosed methods may be implemented such that changes in channel selection and/or protocol parameters are only permitted on a periodic basis in order minimize unnecessary channel changes or protocol modifications instigated by short term channel deterioration or obstruction. Further, statistics regarding packet transmission delays may be maintained on an access category basis and/or by traffic ID or equivalents.

**FIG. 8** is a flow diagram illustrating a "progressive" channel relocation method in accordance with an embodiment of the present invention. The method commences in step 800 following receipt of channel switch announcement ACKs from all associated client devices. Next, in step 802, the host device selects a new operational channel on a random or semi-random basis. Previously attempted channels and/or channels that have otherwise been determined to be (likely) undesirable channels (e.g., channels immediately adjacent certain undesirable channels) may be disqualified or masked from this selection process. The disqualification of such channels need not be permanent in all instances, especially when network conditions are highly variable.

The BSS including the host device and client device(s) is then relocated to the selected channel in step 804. Next, in step 806, the host device enters into a silent period to monitor and assess the channel utilization of the selected channel by other devices/BSSs. During this silent period, the host device does not transmit application-related data. The duration of the silent period may be either fixed or programmable.

Following the silent period, the monitored channel utilization values for the silent period are compared to a predetermined threshold in step 808. If the monitored values do not exceed the threshold, transmission of the video stream is resumed on the selected channel (step 810). Again, the host device may resume transmission of the video stream by first sending an 1-frame or similar type of frame that requires little or no information from preceding frames in order to be successfully decoded.

If the threshold of step 808 is exceeded, the foregoing method is repeated for a different channel that is selected as described above. As may be appreciated, the channel assessment performed by steps 806 and 808 thus function to protect both continuing transmission of the video stream 202, as well as transmissions from other devices sharing the relevant channels.

Referring now to **FIG. 9****,** a flow diagram is illustrated for a "selective" channel relocation method in accordance with an embodiment of the present invention. Following initiation of a selective channel relocation in step 900, the method continues in step 902 and supported wireless channels are actively scanned to collect clear channel assessment statistics and to determine the number of wireless devices present per channel that might compete for channel allocation. Scanned wireless channels may include all supported channels or a subset of such channels that excludes, for example, previously disqualified channels and/or channels that are otherwise likely to be suboptimal. Alternatively, and in order to reduce the duration of the scanning process, a subset of supported channels or frequency bands may be scanned, with further scanning occurring in the event a suitable channel is not located in a prior subset.

Clear channel assessment statistics collected in step 902 may comprise, for example, an indication of the percentage of channel bandwidth consumed by non-related signal energies during the scanning interval. Such statistics may further include, without limitation, an indication(s) of the duration of channel usage events that might preempt or otherwise compete for channel bandwidth otherwise allocable for video streaming by wireless access device 106.

Next, in step 904, the information generated in step 902 is analyzed to select a new channel for continued transmission of the video stream 202. In one embodiment, the best available supported channel (as determined by one or more of the statistics generated in step 902) is first analyzed. For example, the channel having the lowest percentage of channel bandwidth consumed by non-related signal energies may initially be analyzed. If the channel is then determined to have channel usage events below a predetermined duration threshold and/or support a number of unaffiliated wireless devices below another threshold, the channel is selected and the network is relocated to the selected channel in step 906. Otherwise, if the relevant thresholds are exceeded, the next best available channel, as determined by the percentage of channel bandwidth used by non-related signal energies, is chosen for similar analysis. Following successful channel relocation in step 906, transmission of the video stream is resumed on the selected channel (step 908). Again, the host device may resume transmission of the video stream by first sending an 1-frame or similar type of frame.

In another embodiment, candidate channels are first screened by disqualifying channels having a relatively high number of lengthy duration channel usage events. Channel(s) are then selected based on the available percentage of channel bandwidth and/or the number of unaffiliated wireless devices utilizing the channel. During the selection process, weighting of duration statistics may be variable depending, for example, on the percentage of channel bandwidth consumed by non-related signal energies (with relatively long duration events more readily disqualifying channels in which the available percentage of bandwidth is low). Other variations will be appreciated by those skilled in the art.

**FIG. 10** is a flow diagram illustrating a method for calculating packet transmission delay and packet loss information in accordance with an embodiment of the present invention. The illustrated method may be utilized, for example, in an exemplary embodiment of step 402 (monitor packet transmission delay and packet loss statistics on a periodic basis). Briefly, packets are submitted into a transmit queue for transmission by the MAC/PHY. An initial timestamp of this en-queuing event is maintained. Following a period of time, which may include multiple "retries" in the event of an initial packet transmission failure, a packet is either successfully acknowledged by the client device or expired/dropped after a certain predefined number of attempts or a retry timeout (cumulatively "packet lifetime"). Following an acknowledgement or packet expiration event, the MAC/PHY communicates a "status message" to higher communication layers in the host device, and a completion timestamp is generated. The difference between this completion timestamp and the initial timestamp may then be calculated and used as a measurement of packet delay/latency.

Referring more specifically to the illustrated embodiment, in step 1000 individual or aggregated video packets in an encoded video stream are marked with an indication of the time ("timestamp") at which the respective packets are generated or submitted for transmission over a wireless channel. For example, MAC protocol data units (MPDUs) or the like may be marked with an additional field in the transmit descriptor portion of the header in order track frame submission time. The frame submission time is utilized to calculate the delay between the frame submission and completion/acknowledgement of transmission (including, for example, inter-frame-spacing, any retransmission time, B/ACK duration, and protection duration).

Video packets, including marked video packets, are next transmitted over a wireless channel for receipt by a video device in step 1002. Next, the method resumes in step 1004, and transmission delays and packet loss information for the marked video packets are calculated by comparing frame submission times and associated transmission acknowledgement and/or packet expiration indications. The calculated transmission delays are subsequently utilized (step 1006) in a channel and/or protocol parameter selection process such as described herein. On a periodic basis (e.g., every Tms), transmission delay and packet loss information is refreshed in step 1008.

In certain alternate embodiments, the holding time of packets in an encoder buffer or output FIFO could be similarly analyzed and used to estimate or supplement packet latency values. This approach may obviate the need for transmission acknowledgements and be useful, for example, in certain multicast environments where use of ACK protocols may be undesirable or difficult to implement.

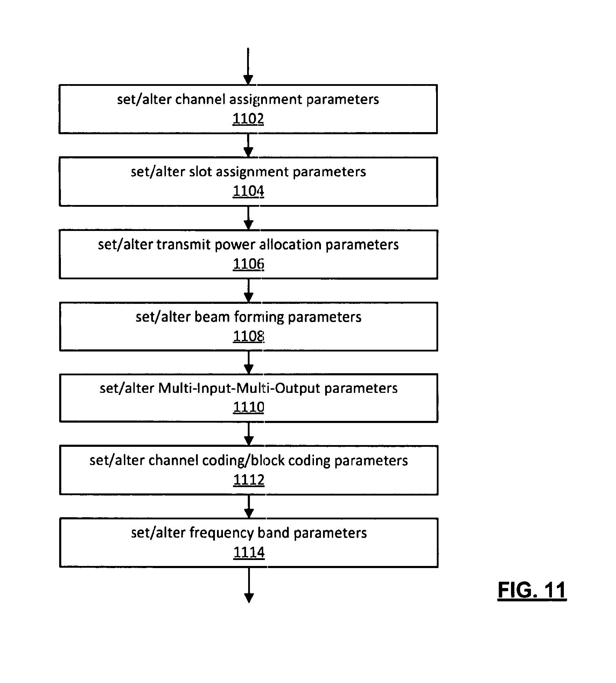

**FIG. 11** is a flow diagram illustrating operations for altering transmission parameters of a wireless channel according to one or more embodiments of the present invention. One or more of the following illustrated protocol parameters may be set or altered as a result, for example, of step 410 of **FIG. 4****;** channel assignment parameters 1102, slot assignment parameters 1104, transmit power allocation parameters 1106, beam forming parameters 1108, MIMO parameters 1110, channel coding/block coding parameters 1112, and/or frequency band assignment parameters 1114.

In addition to dynamic channel and protocol parameter selection, it is contemplated that statics generated by various embodiments of the invention may be utilized for additional or alternate purposes. By way of example, channel utilization information may be utilized to govern or modify other wireless quality of service (QoS) parameters, employment of CDMA or other coding overhead, schedule changes to decoder configuration, adaptively alter display mode configurations, etc.

It is noted that the various modules and/or circuitries (e.g., encoding modules and/or circuitries, decoding modules and/or circuitries, encoder rate adaptation modules and/or circuitries, etc.) described herein may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The operational instructions may be stored in a memory. The memory may be a single memory device or a plurality of memory devices. Such a memory device may be a read-only memory (ROM), random access memory (RAM), volatile memory, non-volatile memory, static memory, dynamic memory, flash memory, and/or any device that stores digital information. It is also noted that when the processing module implements one or more of its functions via a state machine, analog circuitry, digital circuitry, and/or logic circuitry, the memory storing the corresponding operational instructions may be embedded with the circuitry comprising the state machine, analog circuitry, digital circuitry, and/or logic circuitry. In such an embodiment, a memory stores, and a processing module coupled thereto executes, operational instructions corresponding to at least some of the steps and/or functions illustrated and/or described herein.

It is also noted that any of the connections or couplings between the various modules, circuits, functional blocks, components, devices, etc. within any of the various diagrams or as described herein may be differently implemented in different embodiments. For example, in one embodiment, such connections or couplings may be direct connections or direct couplings there between. In another embodiment, such connections or couplings may be indirect connections or indirect couplings there between (e.g., with one or more intervening components there between). Of course, certain other embodiments may have some combinations of such connections or couplings therein such that some of the connections or couplings are direct, while others are indirect. Different implementations may be employed for effectuating communicative coupling between modules, circuits, functional blocks, components, devices, etc. without departing from the scope and spirit of the invention.

Various aspects of the present invention have also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

Various aspects of the present invention have been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, various aspects of the present invention are not limited to such embodiments. It will be obvious to one of average skill in the art that various changes and modifications may be practiced within the spirit and scope of the invention, as limited only by the scope of the appended claims.

## Claims

1. A method for use in a wireless access device during the transmission, over a first wireless channel, of a video stream, the method comprising:
monitoring a transmit queue of the wireless access device to generate transmission delay information for packets of the video stream transmitted over the first wireless channel;
comparing the transmission delay information to a predetermined threshold(s); and
triggering selection of a second wireless channel for further transmission of the video stream if the transmission delay information exceeds the predetermined threshold(s).

2. The method of claim 1, wherein the step of monitoring a transmit queue comprises:
marking a video packet(s) with an indication of the time the respective video packet(s) is submitted for transmission by the wireless access device;
receiving at least one of associated transmission acknowledgment and packet expiration information for the video packet(s);
calculating transmission delays for the video packet(s) by comparing the indication of the time the respective video packet(s) is submitted for transmission with the associated transmission acknowledgment information and/or packet expiration information; and
generating transmission delay information based on the calculated transmission delays.

3. The method of claim 2, further comprising:
generating a completion timestamp relating to the transmission acknowledgment and/or packet expiration information, and wherein the step of calculating transmission delays for the video packets comprises comparing the indication of the time a video packet is submitted for transmission with the timestamp.

4. The method of claim 1, wherein the step of selecting a second wireless channel occurs on a periodic basis, and wherein the threshold(s) value(s) are established such that transmission delay information in excess of the threshold(s) value(s) is indicative of potential difficulties in transmission of the video stream.

5. The method of claim 4, wherein the predetermined threshold(s) is at least one of a maximum tolerated delay threshold and a total packet loss threshold.

6. The method of claim 4, wherein the threshold(s) value(s) are adjustable in response to at least one of PHY characteristics, transmission protocol parameters, communication protocol parameters, and channel and reception characteristics relating to the wireless channel.

7. The method of claim 1, further comprising
analyzing the first wireless channel to generate channel utilization statistics; and
comparing the channel utilization statistics to a second predetermined threshold(s), wherein the step of triggering selection of a second wireless channel is further dependent on a determination that the channel utilization statistics exceed the second predetermined threshold(s).

8. The method of claim 7, wherein the channel utilization statistics indicate channel utilization by at least one of transmissions from other devices and other energies in the first wireless channel.

9. The method of claim 7, wherein the channel utilization statistics comprise counter values indicating the duration of detected transmissions from other devices sharing the first wireless channel.

10. The method of claim 1, further comprising
identifying a second wireless channel;
transmitting a channel switch announcement, the announcement including an identification of the second channel;
receiving an acknowledgment of the channel switch announcement; and continuing transmission of the video stream utilizing the second wireless channel.

11. A method for use in a wireless access device during the transmission, over a first wireless channel, of a video stream, the method comprising:
monitoring a transmit queue of the wireless access device to generate transmission delay information for packets of the video stream transmitted over the first wireless channel;
comparing the transmission delay information to a predetermined threshold(s);
triggering selection of a second wireless channel for further transmission of the video stream if the transmission delay information exceeds the predetermined threshold(s); and
altering at least one protocol parameter of the second wireless channel.

12. An apparatus, comprising:
a network interface for supporting transmission of a packetized video stream over a wireless channel of a plurality of supported wireless channels, the network interface comprising a transmit queue; and
a channel selection module operable to dynamically control selection of the wireless channel by:
monitoring the transmit queue of the network interface to generate transmission delay information for packets of the video stream transmitted over a first wireless channel;
comparing the transmission delay information to a predetermined threshold(s); and
triggering selection of a second wireless channel for further transmission of the video stream if the transmission delay information exceeds the predetermined threshold(s).

13. The apparatus of claim 12, wherein monitoring the transmit queue comprises:
marking a video packet(s) with an indication of the time the respective video packet(s) is submitted for transmission by the network interface;
receiving at least one of associated transmission acknowledgment and packet expiration information for the video packet(s);
calculating transmission delays for the video packet(s) by comparing the indication of the time the respective video packet(s) is submitted for transmission with the associated transmission acknowledgment information and/or packet expiration information; and
generating transmission delay information based on the calculated transmission delays.

14. The apparatus of claim 13, the channel selection module further operable to dynamically control selection of the wireless channel by:
analyzing the first wireless channel to generate channel utilization statistics; and
comparing the channel utilization statistics to a second predetermined threshold(s), wherein triggering selection of a second wireless channel is further dependent on a determination that the channel utilization statistics exceed the second predetermined threshold(s).

15. The apparatus of claim 14, wherein the channel utilization statistics indicate channel utilization by transmissions from other devices and other energies in the first wireless channel.
